# FASCICULE DE BREVET EUROPEEN

(11) **EP 3 314 788 B1**
(45) Date de publication et mention de la délivrance du brevet: **19.02.2020**
(21) Numéro de dépôt: 16734247.6
(22) Date de dépôt: 24.06.2016
(51) Int. Cl.: H04W 52/02, G06Q 20/30, H04B 7/26

(54) **MODULE RADIO, DISPOSITIF ET PROGRAMME CORRESPONDANT**
FUNKMODUL, VORRICHTUNG UND ZUGEHÖRIGES PROGRAMM
RADIO MODULE, DEVICE AND CORRESPONDING PROGRAM

(30) Priorité: 26.06.2015 FR 1556009
(43) Date de publication de la demande: 02.05.2018
(73) Titulaire: Ingenico Group, 75015 Paris (FR)
(72) Inventeur: JACQUEMONT, Nicolas, 26120 Montmeyran (FR); BERTHIAUD, Olivier, 07130 Cornas (FR)
(74) Mandataire: Vidon Brevets & Stratégie
(86) Numéro de dépôt international: PCT/EP2016/064762
(87) Numéro de publication internationale: WO 2016/207410

(56) Documents cités:
- FR-A1- 2 803 071
- GB-A- 2 352 344
- CHUNLEI SHI ET AL: "A Highly Integrated Power Management IC for Advanced Mobile Applications", IEEE JOURNAL OF SOLID-STATE CIRCUITS, IEEE SERVICE CENTER, PISCATAWAY, NJ, USA, vol. 42, no. 8, 1 août 2007 (2007-08-01), pages 1723-1731, XP011188665, ISSN: 0018-9200, DOI: 10.1109/JSSC.2007.900284

## Description

### 1. Domaine

La technique proposée se rapporte à la gestion de l'énergie électrique dans des dispositifs mobiles. La technique proposée se rapporte plus spécifiquement à la gestion de l'énergie dans des dispositifs mobiles comprenant des moyens d'émission et de transmission. La technique proposée se rapporte encore plus spécifiquement au domaine des modules d'émission et de transmission de données par voie hertzienne intégrés dans des dispositifs mobiles. De tels modules sont également appelés modules RF (Radio Fréquence). La technique proposée se rapporte plus particulièrement à la gestion de l'alimentation des modules RF. La technique proposée s'applique en particulier dans dispositifs électroniques mobiles, tels que les terminaux de paiement.

### 2. Art Antérieur

Les dispositifs électroniques mobiles, tels que les tablettes et les terminaux de paiement, sont largement utilisés dans la vie quotidienne. Ces dispositifs sont souvent munis de modules radio qui permettent de se connecter aux réseaux de communication, tel que l'Internet. Par exemple, un terminal de paiement comprend normalement un module fonctionnel pour la gestion du paiement, et un module radio pour assurer la communication avec un serveur de paiement, afin de pouvoir réaliser des transactions financières avec des serveurs distants.

Il est souvent difficile d'intégrer ces fonctions radio en conciliant les contraintes liées aux différentes fonctions de ces dispositifs et les contraintes liées au poids, à la compacité et coûts. L'une des contraintes importantes concerne la gestion de l'énergie. En effet, les dispositifs mobiles sont alimentés par une ou plusieurs batteries qui ont une capacité limitée. En règle générale, un tel dispositif dispose d'une seule batterie. Or les modules radio sont gourmands en énergie et nécessite une alimentation régulée.

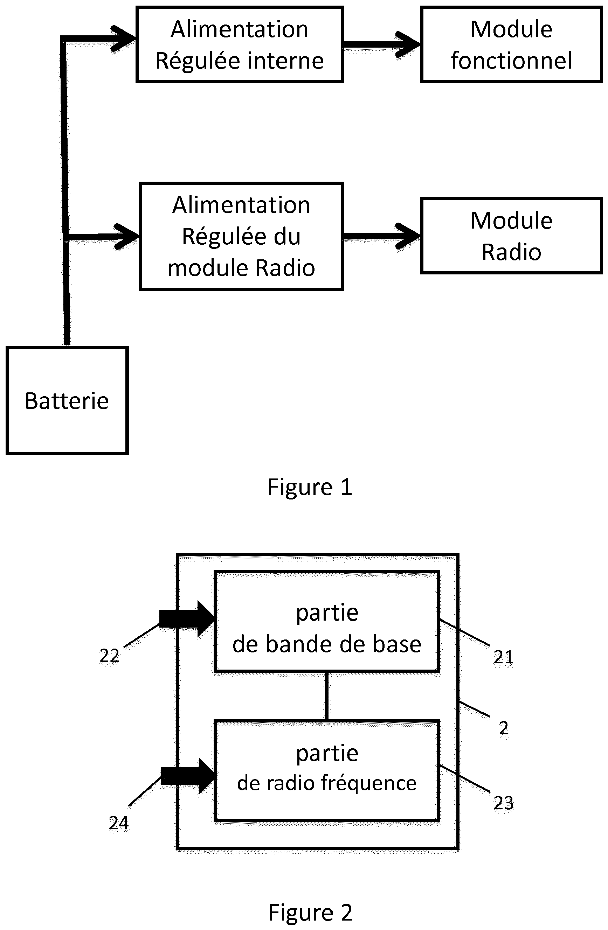

La figure 1 illustre une architecture générale de l'alimentation d'un dispositif de communication mobile de l'état de la technique. Ce dispositif de communication mobile comprend une alimentation régulée interne qui alimente un module fonctionnel pour assurer les fonctions principales du dispositif de communication mobile (affichage, saisie, traitement de données, etc.), et une alimentation régulée du module radio qui alimente le module radio. Lorsque le dispositif de communication mobile est un terminal de paiement, l'alimentation régulée prend également en charge le traitement de transactions comprenant par exemple l'obtention de données en provenance d'un moyen de paiement, la vérification d'un code d'identification personnel, le chiffrement et le déchiffrement de données, etc.). Dans l'exemple de la figure 1, l'alimentation régulée interne fournit une tension de sortie de 3,3 volts et un courant de sortie de 100 mA. Ainsi, comme on peut le constater, la puissance du module fonctionnel est relativement faible.

En revanche, la puissance du module radio est nettement plus élevée, en particulier lors de la période de transmission et/ou de réception de signaux. L'alimentation régulée du module radio doit être capable de fournir une tension de sortie de 3,6 volts et un courant moyen de sortie de 900 mA (et jusqu'à 1,8 A en crête). La puissance requise est donc d'environ dix à vingt fois supérieure.

Cette architecture d'alimentation d'un dispositif de communication mobile intégrant un module radio entraine une perte importante du rendement énergétique. En effet, les alimentations régulées sont les appareils consommant de l'énergie. Ces appareils apportent une perte énergique additionnelle. Dans l'exemple, l'alimentation régulée mise en place pour le module radio a un rendement de l'ordre de 80%. Ce rendement a un impact visible sur l'autonomie du terminal. Le document GB2352344 décrit des moyens d'alimentation électriques d'un amplificateur RF et d'un circuit à faible courant (ou un circuit numérique). De tels moyens d'alimentation électrique comprennent une batterie, un réservoir capacitif connecté à la batterie au moyen d'une diode et à un régulateur. Le régulateur est connecté à un circuit à faible courant et au réservoir capacitif. La batterie est également connectée à un amplificateur RF au moyen d'un interrupteur.

Il existe donc un besoin de fournir une solution qui réponde aux problèmes de rendement énergique et d'autonomie des dispositifs intégrant des modules radios.

### 3. Résumé

La présente divulgation ne présente pas au moins certains des problèmes posés par l'art antérieur. La technique proposée porte sur un module radio comprenant une première partie de bande de base et une deuxième partie de radio fréquence. Selon la présente technique, ledit module comprend une première interface d'alimentation pour ladite partie de bande de base et une deuxième interface d'alimentation pour ladite deuxième partie de radio fréquence.

Ainsi, le module radio peut être alimenté par deux alimentations différentes. Il ne nécessite plus d'alimenter le module radio par une seule alimentation régulée.

Selon une caractéristique particulière, ladite première interface d'alimentation a une tension nominale fixe et que ladite deuxième interface d'alimentation a une tension nominale variable.

Ainsi, la deuxième partie de radio fréquence peut être alimentée par une alimentation non-régulée, par l'intermédiaire de la deuxième interface d'alimentation.

Selon une caractéristique particulière, ledit module radio implémente au moins une des techniques de communication suivantes : Wi-Fi, GPRS, CDMA, EDGE, UMTS, HSPDA et LTE.

Selon un autre aspect, l'invention se rapporte également à un dispositif électronique comprenant un module fonctionnel qui comprend un module radio tel que décrit précédemment.

Selon une caractéristique particulière, un tel dispositif comprend une alimentation régulée et une alimentation de puissance, ladite alimentation de puissance étant connecté à ladite deuxième interface d'alimentation, ladite alimentation régulée étant connectée à ladite première interface d'alimentation.

Selon une caractéristique particulière, ladite alimentation régulée est alimentée par ladite alimentation de puissance, ladite alimentation de puissance étant une batterie.

Ainsi, la deuxième partie de radio fréquence du module radio est directement alimentée par la batterie. Ceci permet d'éviter la perte d'énergie entrainée par les appareils intermédiaires.

Selon une caractéristique particulière, le dispositif comprend un détecteur de tension de ladite batterie.

Ainsi, on peut utiliser ainsi au mieux toute la capacité de la batterie.

Selon un mode de réalisation particulier, ledit module fonctionnel est alimenté par ladite alimentation régulée.

Ainsi, l'alimentation régulée est réutilisée pour alimenter à la fois le module fonctionnel et la première partie de bande de base du module radio. Il n'est plus nécessaire de prévoir une deuxième alimentation régulée pour alimenter le module radio.

Selon un mode de réalisation particulier, ladite alimentation régulée a une tension de sortie de 3 volts, ladite alimentation de puissance a une tension variable de 2,8 à 4,2 volts.

Selon un mode de réalisation particulier, le dispositif comprend un interrupteur permettant de couper l'alimentation de la deuxième interface d'alimentation dudit module radio.

Ainsi, le dispositif peut ainsi être basculé dans un mode d'économie d'énergie de manière rapide et efficace.

Selon un mode de réalisation particulier, ledit dispositif électronique est un terminal de paiement.

La technique proposée se rapporte également à un procédé de gestion d'une alimentation électrique d'un module radio comprenant une première partie de bande de base et une deuxième partie de radio fréquence, comprenant chacune une interface d'alimentation indépendante. Un procédé comprend une étape de mesure d'une tension d'une source d'alimentation d'un dispositif électronique au sein duquel le module radio est installé. En fonction de la tension mesurée et de la présence d'une donnée à transmettre ou recevoir par le dispositif électronique, une étape d'activation ou de désactivation de la deuxième partie du module radio.

Ainsi, un tel procédé permet de gérer de manière simple et efficace l'énergie disponible pour effectuer la transmission et la réception de données par l'intermédiaire du module radio.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1, déjà commentée, illustre une architecture interne de l'alimentation d'un terminal de paiement;
- la figure 2 illustre l'architecture d'un module radio selon la technique proposée;
- la figure 3 illustre l'architecture de l'alimentation d'un terminal de paiement selon la technique proposée;

### 5. Description

Un objet de la présente technique est d'améliorer le rendement énergique et l'autonomie d'un dispositif de communication mobile intégrant un module radio. Les inventeurs ont constaté que le rendement de l'alimentation du module radio impacte de manière particulièrement importante l'autonomie. Le principe général de la technique proposée consiste à modifier l'alimentation du module radio de l'état de la technique. En effet, un module radio est divisé en deux parties :
- une première partie de bande de base qui a une puissance faible mais nécessite une alimentation régulée; et
- une seconde partie de radio fréquence qui accepte une plage d'alimentation plus large et ne nécessite pas une alimentation régulée.

Selon la technique proposée, les deux parties du module radio peuvent être alimentées, de manière séparée, respectivement par l'intermédiaire d'une première interface d'alimentation et d'une deuxième interface d'alimentation.

La figure 2 illustre l'architecture d'un module radio selon la technique proposée. Le module de radio 2 comprend une première partie de bande de base 21 et une seconde partie de radio fréquence 23. La première partie de bande de base 21 peut comprendre les circuits et les composants analogues qui fonctionnent en bande de base, et les circuits et les composants numériques (ex. processeur, interface MMI, i.e. interfaces mémoires : ram, mémoire flash). Cette première partie de bande de base 21 n'est pas gourmande en énergie. Cependant, elle nécessite une alimentation régulée, à 3,3V par exemple, et capable de fournir 100 à 200 mA. La partie bande de base correspond donc au processeur du module et au traitement du signal (DSP, pour « digital signal processing ») et aux mémoires ; elle comprend également la partie interfaçage avec la carte SIM comprenant les informations du souscripteur et de son abonnement ; Ces composants sont soumis a des contraintes d'alimentations strictes. Par exemple les cartes SIM sont alimentés directement par le module ; Ces cartes SIM ont une tension d'alimentation en entrée en général de 3,3V ou 1,8volts, cette tension d'entrée ne doit pas varier. La partie bande de base permet donc de gérer toutes les fonctions qui ne font pas intervenir le réseau ou un lien extérieur. Ces fonctions ne sont pas fortement consommatrices en énergie instantanée mais nécessite d'être bien régulée.

La deuxième partie de radio fréquence 23 peut comprendre les circuits et les composants (en particulier les amplificateurs, les antennes) qui fonctionne en radio fréquence. Cette deuxième partie du module radio 23 nécessite une alimentation de puissance (plus de 1A de courant en crête). Toutefois, elle ne nécessite pas une alimentation régulée et accepte une plage d'alimentation plus large (par exemple de 3,0V à 4,2V). La partie radio fréquence 23 correspond aux chaines d'amplifications des signaux sur les différentes bandes de fréquences. Elle comprend en général un « transceiver » (« transmetteur/récepteur ») qui met en forme les signaux selon le type de modulation et la fréquence et est chargé d'amplifier ces signaux afin de les transmettre à un niveau de puissance déterminé. Le signal de sortie est envoyée jusqu'à l'antenne qui est en charge de le « diffuser ». Les plages d'alimentation de ces composants sont plus larges que pour les composants de la bande de base mais sont beaucoup plus gourmand en terme énergétique.

Le module radio 2 comprend aussi une première interface d'alimentation 22 et une deuxième interface d'alimentation 24 qui permettent de respectivement aux alimentations externes (ou à l'unique alimentation externe) d'alimenter la première partie de bande de base 21 et une deuxième partie de radio fréquence 23.

Le module radio 2 peut implémenter tous types de techniques de communication qui comprennent, mais ne se sont pas limité aux normes de télécommunications mobiles (2G, 3G, 4G, 5G) et aux normes concernant les réseaux sans fil (IEEE 802.11 Wi-Fi, IEEE802.15 Bluetooth, IEEE 802.16 WiMax, etc.) et récepteur GPS.

Selon la technique proposée, le module radio 2 peut être alimenté par deux alimentations séparément. Une première alimentation peut être branchée à la première interface d'alimentation 22 pour alimenter la première partie de bande de base 21. Cette première alimentation est régulée et fournit une tension de 3,3V et un courant de 100 à 200 mA. Une deuxième alimentation peut être branchée à la deuxième interface d'alimentation 23 pour alimenter la deuxième partie de radio fréquence 23. Cette deuxième alimentation est une alimentation de puissance non-régulée et fournit une tension variable de 3,0 à 4,2V et un courant de 1,8A. A la différence de l'état de la technique selon lequel tout le module radio est alimenté par une alimentation régulée, le module selon la technique proposée n'est alimenté que partiellement (la première partie de bande de base 21) par une alimentation régulée. L'énergie consommée par la deuxième partie de radio fréquence n'est plus fournie par une alimentation régulée qui consomme de l'énergie additionnelle. Ainsi, le rendement énergie pour alimenter le module radio est amélioré.

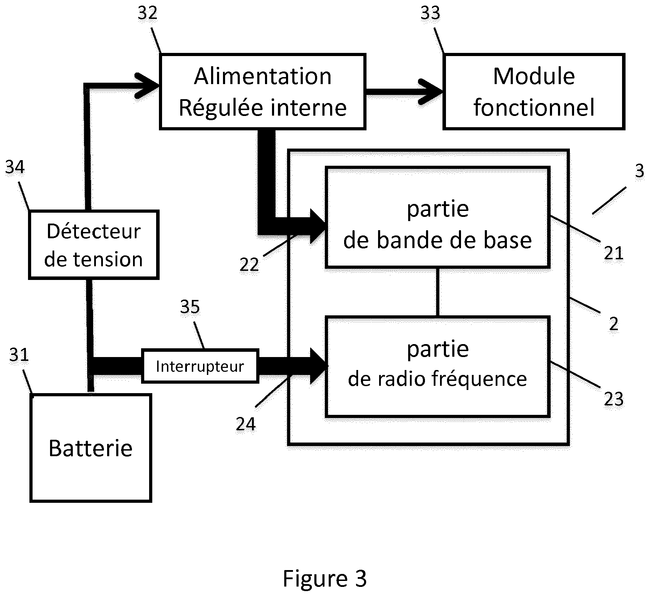

La figure 3 illustre une architecture de l'alimentation d'un terminal de paiement intégrant un module radio de la technique proposée. Cette architecture d'alimentation peut être aussi transportée aux autres dispositifs intégrants un module radio.

Le terminal de paiement illustré en relation avec la figure 3 comprend une batterie 31, une alimentation interne régulée 32, un module fonctionnel 33 et un module radio 2. La batterie peut être consistée d'une cellule Li-ion. Il s'agit d'une alimentation de puissance et elle fournit une tension de sortie nominale de 3,6V. Cependant, en pratique, cette tension est souvent variable (par exemple entre 2,8 à 4,2V) selon l'état de la batterie 31 (et notamment l'état de charge). Le module fonctionnel 33 comprend les circuits et les composants (par exemple, lecteur de carte, clavier et écran) et permet de remplir la fonction principale du terminal de paiement (toutes les fonctions à l'déception de celle de communication remplie par le module radio). Ce module fonctionnel 33 nécessite une tension d'entrée constante (par exemple 3,3V), et ne peut pas être directement alimentée par la batterie 31. L'alimentation régulée interne 32 permet de réguler la tension et le courant de la batterie. Elle est alimentée par la batterie et fournit une tension constante (ex. 3,3V) pour alimenter le module fonctionnel 33. Selon la technique proposée, la partie de bande de base 21 du module radio 2 est aussi alimentée par l'alimentation régulée interne 32 du terminal de paiement 3. Ainsi, cette alimentation régulée interne 32 est réutilisée. Il n'est plus nécessaire de prévoir une nouvelle alimentation régulée pour alimenter la partie 21 de bande de base 21 du module radio 2. La partie de radio fréquence 23 est directement alimentée par la batterie 31. La plage d'alimentation acceptée (ex. 3,0 à 4,2V) par la deuxième partie de radio fréquence 23 est comprise dans la plage de tentions variables (ex. 2,8 à 4,2V) fournie par la batterie 31. La plage de tension de la batterie 31 est ainsi mieux exploitée. En outre, la batterie est une alimentation de puissance et permet de fournir un courant en crête de l'ordre de 1,8A pendant les phases d'émissions. La deuxième partie de radio fréquence 23 n'est plus nécessairement alimentée par une alimentation régulée. La perte de l'énergie par l'alimentation régulée pour alimenter la deuxième partie de radio fréquence 23 est ainsi évitée. Par conséquence, le rendement énergique du terminal de paiement 3 est amélioré et le coût de fabrication du terminal 3 est optimisé.

De préférence, le terminal de paiement 3 comprend aussi un détecteur de tension 34 de la batterie. Le terminal 3 peut surveiller la tension instantanée de la batterie. La surveillance de la tension de la batterie peut être réalisée par un processeur du terminal en exécutant les instructions d'un programme d'ordinateur. Si la tension instantanée de la batterie 31 est dans la plage de tension acceptée par la deuxième partie de radio fréquence 23, le module radio est activité. On peut utiliser ainsi au mieux toute la capacité de la batterie. Si la tension instantanée de la batterie 31 n'est pas dans la plage de tension acceptée par la deuxième partie de radio fréquence 23, le processeur du terminal de paiement 3 peut désactiver le module radio 2 afin de économiser l'énergie et d'éviter d'endommager le module radio 2.

Plus précisément, dans un mode de réalisation spécifique, le terminal de paiement 3 comprend aussi un interrupteur 35 qui permet de couper l'alimentation de la deuxième partie de radio fréquence 23 du module radio 2 sans éteindre le module radio dans sa totalité. L'interrupteur 35 peut être contrôlé manuellement par l'utilisateur ou automatiquement par le processeur du terminal de paiement. Il n'est ainsi pas nécessaire d'éteindre complètement le module radio pour activer le mode « avion ». Le terminal de paiement peut ainsi être basculé au mode « avion » rapidement tout en étant en mesure de disposer d'une partie de ses fonctionnalités d'émission/réception (les fonctionnalités liées à la partie bande de base). Cette fonction peut par exemple être mise en œuvre dans les avions mais peut également etre mise en œuvre pour ne pas vider la batterie de l'appareil lorsqu'il n'y a pas utilité à faire des transmissions. Les taxis, livreurs sont des exemples de commerçants dont le terminal de paiement comprend un module Radio de type 2G/3G ou 4G. Le fait de se déplacer engendre beaucoup de changement de conditions réseau et donc de consommation de batterie : ces changements de conditions réseaux entrainent des échanges radio entre l'appareil et le réseau afin de se signaler mutuellement les changements respectifs. Cela induit par conséquent des émissions et donc contribue à vider la batterie. Il est donc proposé d'utiliser le module radio de la présente technique pour basculer en mode basse consommation, soit manuellement, soit automatiquement. Lorsque le basculement est manuel, il peut être mis en œuvre par l'intermédiaire d'un menu ou d'un appui touche. Le mode basse consommation est activé par le basculement de l'interrupteur de l'alimentation de la partie radio du terminal de paiement.

Ceci permet donc un gain d'autonomie et de ne pas pas pénaliser le temps de mise en route du terminal ou du module par rapport à un mode de coupure existant. L'utilisateur (ou le terminal lorsque le basculement est automatique) peut donc par ce nouveau moyen activer ou couper la partie radio instantanément et surtout sans perte de temps pour la remise en fonctionnement. L'intérêt est donc multiple : gain d'autonomie, diminution/extinction des émissions radiofréquence à l'intérieur de zones « sensibles » (avion, etc..),

Ainsi, la technique se rapporte également à un procédé de gestion d'une alimentation électrique d'un module radio comprenant une première partie de bande de base et une deuxième partie de radio fréquence, comprenant chacune une interface d'alimentation indépendante. Un procédé comprend une étape de mesure d'une tension d'une source d'alimentation d'un dispositif électronique au sein duquel le module radio est installé. En fonction de la tension mesurée et de la présence d'une donnée à transmettre ou recevoir par le dispositif électronique, une étape d'activation ou de désactivation de la deuxième partie du module radio.

Ainsi, un tel procédé permet de gérer de manière simple et efficace l'énergie disponible pour effectuer la transmission et la réception de données par l'intermédiaire du module radio. En effet, lorsque le terminal ne souhaite ni transmettre, ni recevoir de données (par exemple parce que le terminal n'effectue aucune transaction), il peut, au choix, soit interrompre totalement l'alimentation fournie à la deuxième partie du module, lorsque par exemple la tension ou l'ampérage de la source d'alimentation se situe en dessous d'un seuil prédéterminé (par exemple 50%). Le dispositif électronique effectue une mesure de cette tension de manière régulière. Lorsque la tension ou la quantité de courant ou l'ampérage de la source d'alimentation excède le seuil, le dispositif peut choisir : soit de maintenir l'alimentation de la deuxième partie du module radio, afin par exemple de permettre un ou plusieurs handover rapides du dispositif électronique lors de déplacement (ainsi, il n'est pas nécessaire d'attendre la mise en œuvre d'un handover « long » lors de la réalimentation de la deuxième partie du module radio), soit de mettre en œuvre une alimentation intermittente afin de transmettre ou recevoir des données à intervalle régulier. On rappelle qu'un handover désigne l'ensemble des opérations mises en œuvre pour permettre à un dispositif de communication mobile change de cellule radio sans interruption de la conversation ou du transfert des données.

Le processus de handover permet à un dispositif de communication mobile de maintenir la communication en cours, lors d'un déplacement qui amène le mobile à changer de cellule. En effet lorsque le signal de transmission entre un téléphone et une station de base (BTS) s'affaiblit, le logiciel du téléphone mobile cherche une autre station de base disponible dans une autre cellule, qui soit capable d'assurer à nouveau la communication dans les meilleures conditions. Or un tel processus est très consommateur d'énergie et de temps. Ainsi, de manière régulière, même lorsqu'aucune communication n'est en cours, le dispositif de communication mobile recherche les stations de base auquel il est connecté, afin de pouvoir entrer immédiatement en fonction lorsque l'utilisateur le souhaite. Le procédé décrit précédemment, en lien avec le module radio à deux parties et deux interfaces d'alimentation, permet de limiter la dépense d'énergie du à ces multiples mises à jour que le dispositif de communication mobile réalise habituellement.

## Revendications

1. Terminal de paiement comprenant :
- un module radio (2) comprenant une première partie de bande de base (21), une deuxième partie de radio fréquence (23), une première interface d'alimentation (22) pour ladite partie de bande de base et une deuxième interface d'alimentation (24) pour ladite deuxième partie de radio fréquence ;
- une alimentation régulée (32) connectée à ladite première interface d'alimentation;
- une alimentation de puissance connectée à ladite deuxième interface d'alimentation;
- **caractérisé en ce que** le dispositif électronique comprend en outre un module fonctionnel (33) replissant les fonctions du terminal de paiement à l'exception de la fonction de communication remplie par le module radio, ledit module fonctionnel étant alimenté par ladite alimentation régulée.

2. Terminal de paiement selon la revendication 1 **caractérisé en ce que** ladite première interface d'alimentation a une tension nominale fixe et que ladite deuxième interface d'alimentation a une tension nominale variable.

3. Terminal de paiement selon la revendication 2, **caractérisé en ce que** ledit module radio implémente au moins une des techniques de communication suivantes : Wi-Fi, GPRS, CDMA, EDGE, UMTS, HSPDA et LTE.

4. Terminal de paiement selon la revendication 1, ladite alimentation régulée étant alimentée par ladite alimentation de puissance, ladite alimentation de puissance étant une batterie.

5. Terminal de paiement selon la revendication 1, **caractérisé en ce qu'**il comprend un détecteur de tension de ladite batterie.

6. Terminal de paiement selon la revendication 1, **caractérisé en ce que** ladite alimentation régulée a une tension de sortie de 3 volts, ladite alimentation de puissance a une tension variable de 2,8 à 4,2 volts.

7. Terminal de paiement selon la revendication 1, **caractérisé en ce qu'**il comprend un interrupteur permettant de couper l'alimentation de la deuxième interface d'alimentation dudit module radio.

## Patentansprüche

1. Zahlungsendgerät, umfassend:
- ein Funkmodul (2), umfassend einen ersten Basisbandteil (21), einen zweiten Funkfrequenzteil (23), eine erste Versorgungsschnittstelle (22) für den Basisbandteil und eine zweite Versorgungsschnittstelle (24) für den zweiten Funkfrequenzteil,
- eine geregelte Stromversorgung (32), die an die erste Versorgungsschnittstelle angeschlossen ist,
- eine Leistungsversorgung, die an die zweite Versorgungsschnittstelle angeschlossen ist,
- **dadurch gekennzeichnet, dass** die elektronische Vorrichtung ferner ein Funktionsmodul (33) aufweist, das die Funktionen des Zahlungsendgeräts mit Ausnahme von der Kommunikationsfunktion erfüllt, die von dem Funkmodul ausgeübt wird, wobei das Funktionsmodul durch die geregelte Stromversorgung versorgt wird.

2. Zahlungsendgerät nach Anspruch 1, **dadurch gekennzeichnet, dass** die erste Versorgungsschnittstelle eine feste Nennspannung aufweist und dass die zweite Versorgungsschnittstelle eine variable Nennspannung aufweist.

3. Zahlungsendgerät nach Anspruch 2, **dadurch gekennzeichnet, dass** das Funkmodul mindestens eine der folgenden Kommunikationstechniken implementiert: Wi-Fi, GPRS, CDMA, EDGE, UMTS, HSPDA und LTE.

4. Zahlungsendgerät nach Anspruch 1, wobei die geregelte Stromversorgung von der Leistungsversorgung gespeist wird, wobei die Leistungsversorgung eine Batterie ist.

5. Zahlungsendgerät nach Anspruch 1, **dadurch gekennzeichnet, dass** es einen Spannungsdetektor der Batterie aufweist.

6. Zahlungsendgerät nach Anspruch 1, **dadurch gekennzeichnet, dass** die geregelte Stromversorgung eine Ausgangsspannung von 3 Volt aufweist, die Leistungsversorgung eine variable Spannung von 2,8 bis 4,2 Volt aufweist.

7. Zahlungsendgerät nach Anspruch 1, **dadurch gekennzeichnet, dass** es einen Schalter aufweist, der ermöglicht, die Stromversorgung der zweiten Versorgungsschnittstelle des Funkmoduls zu unterbrechen.

## Claims

1. A payment terminal comprising:
- a radio module comprising a first baseband part, a second radiofrequency part, a first power supply interface for said baseband part and a second power supply interface for said second radiofrequency part;
- a regulated power supply connected to said first power supply interface;
- a high power supply connected to said second power supply interface **characterized in that** the electronic device furthermore comprises a functional module fulfilling the functions of the payment terminal except for the communications function fulfilled by the radio module, said functional module being powered by said regulated power supply.

2. Payment terminal according to claim 1 **characterized in that** said first power supply interface has a fixed nominal voltage and said second power supply interface has a variable nominal voltage.

3. Payment terminal according to claim 2, **characterized in that** said radio module implements at least one of the following communications techniques: Wi-Fi, GPRS, CDMA, EDGE, UMTS, HSPDA and LTE.

4. Payment terminal according to claim 1, said regulated power supply being powered by said high power supply, said high power supply being a battery.

5. Payment terminal according to claim 1, **characterized in that** it comprises a detector of voltage of said battery.

6. Payment terminal according to claim 1, **characterized in that** said regulated power supply has an output voltage of 3V, said high power supply has a variable voltage of 2.8 to 4.2V.

7. Payment terminal according to claim 1, **characterized in that** it comprises a switch for cutting off the power supply of the second power supply interface of said radio module.
